# EUROPÄISCHE PATENTSCHRIFT

(11) **EP 1 311 801 B1**
(45) Veröffentlichungstag und Bekanntmachung des Hinweises auf die Patenterteilung: **14.09.2005**
(21) Anmeldenummer: 01960114.5
(22) Anmeldetag: 06.07.2001
(51) Int. Cl.: G01B 11/24

(54) **INTERFEROMETRISCHE, KURZKOHÄRENTE FORMMESSVORRICHTUNG FÜR MEHRERE FLÄCHEN ( VENTILSITZ ) DURCH MEHRERE REFERENZEBENEN**
INTERFEROMETRIC, LOW COHERENCE SHAPE MEASUREMENT DEVICE FOR A PLURALITY OF SURFACES (VALVE SEAT) VIA SEVERAL REFERENCE PLANES
DISPOSITIF DE MESURE DE FORME INTERFEROMETRIQUE A FAIBLE COHERENCE POUR PLUSIEURS SURFACES (SIEGE DE SOUPAPE) A TRAVERS PLUSIEURS PLANS DE REFERENCE

(30) Priorität: 07.07.2000 DE 10033027; 03.07.2001 DE 10131780
(43) Veröffentlichungstag der Anmeldung: 21.05.2003
(73) Patentinhaber: ROBERT BOSCH GMBH, 70442 Stuttgart (DE)
(72) Erfinder: PRINZHAUSEN, Friedrich, 73732 Esslingen (DE); LINDNER, Michael, 71397 Leutenbach (DE); THOMINET, Vincent, 1110 Morges (CH)
(86) Internationale Anmeldenummer: PCT/DE2001/002519
(87) Internationale Veröffentlichungsnummer: WO 2002/004889

(56) Entgegenhaltungen:
- EP-A- 0 534 795
- DE-A- 19 808 273
- DE-C- 19 721 843
- US-A- 5 321 501

## Beschreibung

Die Erfindung bezieht sich auf eine interferometrische Messvorrichtung, die zur Formvermessung einer mehrere Flächen aufweisenden Flächenanordnung eines Objektes ausgebildet ist, mit einer eine kurzkohärente Strahlung abgebenden Strahlungsquelle, einem Strahlteiler, mit dem ein über einen Objektlichtweg zu dem Objekt geleiteter Objektstrahl und ein über einen Referenzlichtweg zu einer reflektierenden Referenzebenenanordnung geleiteter Referenzstrahl erzeugbar sind, und mit einem Bildwandler, der die von der Flächenanordnung und der Referenzebenenanordnung zurückgeworfene und zur Interferenz gebrachte Strahlung aufnimmt und einer Auswerteeinrichtung zum Bestimmen eines die Flächen betreffenden Messergebnisses zuführt, wobei zum Messen die optische Länge des Objektlichtweges relativ zu der optischen Länge des Referenzlichtweges änderbar ist oder eine Abtastung eines in dem Objektlichtweg erzeugten Zwischenbildes der Flächen erfolgt.

### Stand der Technik

Eine derartige interferometrische Messvorrichtung ist in der DE 197 21 843 C1 angegeben. Bei dieser bekannten Messvorrichtung mit einer kurzkohärente Strahlung erzeugenden Lichtquelle können mehrere Objektflächen mittels eines gemeinsamen Referenzstrahls durch Änderung der optischen Weglänge des Referenzstrahls mittels einer elektronisch angesteuerten Vorrichtung zur Weglängenänderung abgetastet werden. Dazu weist die Vorrichtung zur Änderung der optischen Weglänge des Referenzstrahls akustooptische Deflektoren sowie ein unter einem bestimmten Winkel geneigtes Beugungsgitter als reflektierendes Element auf. In dem Messabschnitt mit den Objektflächen ist ein Referenzspiegel angeordnet, dessen Abstand ebenfalls mit Hilfe des über die akustooptischen Deflektoren geführten Referenzstrahls bestimmt werden kann.

Eine weitere interferometrische Messvorrichtung dieser Art ist in der DE 41 08 944 A1 angegeben (wobei die vorliegend alternativ noch angegebene Zwischenbildabtastung jedoch nicht genannt ist). Bei dieser bekannten interferometrischen Messvorrichtung, die auf dem Messprinzip der sogenannten Weisslichtinterferometrie oder Kurzkohärenzinterferometrie beruht, gibt eine Strahlungsquelle kurzkohärente Strahlung ab, die über einen Strahlteiler in einen ein Messobjekt beleuchtenden Objektstrahl und einen eine reflektierende Referenzebene in Form eines Referenzspiegels beleuchtenden Referenzstrahl aufgeteilt wird. Um die Objektoberfläche in Tiefenrichtung abzutasten, wird der Referenzspiegel mittels eines Piezostellelementes in Richtung der optischen Achse des Referenzlichtweges verfahren. Wenn der Objektlichtweg und der Referenzlichtweg übereinstimmen, ergibt sich im Bereich der Kohärenzlänge ein Maximum des Interferenzkontrastes, der mittels eines photoelektrischen Bildwandlers und einer nachgeschalteten Auswerteeinrichtung erkannt und zur Bestimmung der Kontur der Objektoberfläche auf der Grundlage der bekannten Auslenkposition des Referenzspiegels ausgewertet wird.

Weitere derartige interferometrische Messvorrichtungen bzw. interferometrische Messverfahren auf der Basis der Weisslichtinterferometrie sind in P. de Groot, L. Deck, "Surface profiling by analysis of white-light interferograms in the spatial frequency domain" J. Mod. Opt., Vol. 42, No. 2, 389-401, 1995 und Th. Dresel, G. Häusler, H. Venzke; "Three-dimensional sensing of rough surfaces by coherence radar", Appl. Opt., Vol. 31, No. 7, 919-925, 1992 angegeben.

In der (nicht vorveröffentlichten) deutschen Patentanmeldung 199 48 813 (DE-Al-100 47 495 veröffentlicht 25,10,2001) ist ebenfalls eine derartige interferometrische Messvorrichtung auf der Basis der Weisstichtinterferometrie gezeigt, wobei insbesondere zur Messung in engen Hohlräumen die laterale Auflösung vergrößert wird, indem im Objektlichtweg ein Zwischenbild erzeugt wird. In der ebenfalls nicht vorveröffentlichten deutschen Patentanmeldung 100 15 878.1 (DE-Al- 101 15524 veröffentlicht 15,11,2001) ist vorgeschlagen, zur Vergrößerung der Schärfentiefe bei gleichzeitig relativ großer lateraler Auflösung eine Zwischenbildabtastung durchzuführen.

Bei den bekannten interferometrischen Messvorrichtungen bzw. Messverfahren bestehen Schwierigkeiten, wenn die Messaufgabe die Abtastung mehrerer voneinander getrennter Flächen erfordert, die z.B. mehrere Millimeter beabstandet und/oder schräg zueinander orientiert sind.

Der Erfindung liegt die Aufgabe zugrunde, eine interferometrische Messvorrichtung der eingangs genannten Art bereit zu stellen, mit der mindestens zwei voneinander räumlich getrennte Flächen mit möglichst geringem Aufwand mit genauen, gut reproduzierbaren Messergebnissen vermessen werden können.

### Vorteile der Erfindung

Diese Aufgabe wird mit den Merkmalen des Anspruches 1 gelöst. Hiernach ist vorgesehen, dass in dem Referenzlichtweg entsprechend der Anzahl der Flächen zum Erzeugen unterschiedlicher optischer Weglängen in dem Referenzlichtweg mehrere Referenzebenen angeordnet sind, die dem Tiefenscan dienen, und dass die von den mehreren zu betrachtenden Flächen und den zugeordneten Referenzebenen zurückgeworfene und zur Interferenz gebrachte und für die Messung abgetastete Strahlung dem Bildwandler zugeführt und in der Auswerteeinrichtung zum Bestimmen des Messergebnisses auswertbar ist.

Beispielsweise mit einer Superpositionsoptik oder Optik mit entsprechender Schärfentiefe werden gleichzeitig mehrere getrennte Flächen desselben oder unterschiedlicher Objekte, beispielsweise einer Führungsbohrung und eines Ventilsitzes, erfasst und abgebildet. Die Aufteilung des Referenzlichtweges in Teil-Referenzlichtwege mit optischen Längen, die an die verschiedenen zu messenden Flächen angepasst sind, ermöglichen eine gleichzeitige oder in kurzem Abstand aufeinander folgende und damit schnelle Abtastung z.B. der Interferenzmaxima der verschiedenen Flächen. Die interferierende Strahlung der verschiedenen Flächen wird gleichzeitig oder nacheinander von dem Bildwandler aufgenommen und an die Auswerteeinrichtung zur Herleitung der Messergebnisse, z.B. Lage der verschiedenen Flächen relativ zueinander, die Höhe und Parallelität und/oder Beschaffenheit der verschiedenen Flächen an sich weitergeleitet. Die Handhabung und Ausbildung der Messvorrichtung ist dabei einfach.

Günstige Aufbaumöglichkeiten bestehen darin, dass in dem Objektlichtweg eine Superpositionsoptik angeordnet ist, mit der von der Fläche und der mindestens einen weiteren Fläche ein Bild erzeugbar ist, und darin, dass auch die weitere Fläche direkt oder über mindestens eine Zwischenabbildung im Objektlichtweg auf dem Bildwandler abbildbar ist.

Zwei vorteilhafte, alternative Ausgestaltungen des Referenzlichtweges bestehen darin, dass die Referenzebene und die mindestens eine weitere Referenzebene nebeneinander oder hintereinander in dem Referenzlichtweg angeordnet sind, wobei im Falle der Hintereinanderordnung die mindestens eine vorgelagerte Referenzebene teildurchlässig ist. Im Falle der Nebeneinanderanordnung können in den unterschiedlichen Teil-Referenzarmen unterschiedliche optische Elemente enthalten sein.

Verschiedene Messmöglichkeiten ergeben sich dadurch, dass die Fläche und die mindestens eine weitere Fläche zu gleichzeitig oder nacheinander positionierten Objekten gehören, wobei die Fläche und die mindestens eine weitere Fläche unterschiedlich weit entfernt sind.

Verschiedene günstige Ausgestaltungen bestehen weiterhin darin, dass der Objektlichtweg zum Erzeugen eines gemeinsamen Zwischenbildes des Zwischenbildes der Fläche und des Zwischenbildes der weiteren Fläche(n) in einer gemeinsamen Zwischenbildebene im Objektlichtweg ausgebildet ist und dass das gemeinsame Zwischenbild direkt oder über mindestens eine Zwischenabbildung auf dem Bildwandler abbildbar ist. Mit mindestens einer Zwischenabbildung im Objektlichtweg ist zum einen eine Zwischenbildabtastung und zum anderen eine erhöhte laterale Auflösung möglich.

Weitere vorteilhafte Ausführungen ergeben sich dadurch, dass der Referenzlichtweg in einem gesonderten Referenzarm oder in einem zu dem Objektlichtweg gehörenden Messarm ausgebildet ist.

Vielfältige Möglichkeiten, auf einfache Weise verschiedene Oberflächen auch an schwer zugänglichen Stellen zu vermessen, ergeben sich dadurch, dass im Objektlichtweg eine bezüglich des Objektes starre Optik angeordnet ist und dass der starren Optik eine in Richtung ihrer optischen Achse bewegliche Optik folgt.

Insbesondere für enge Hohlräume und eine Messung mit relativ großer lateraler Auflösung ist eine Ausbildung günstig, bei der der Objektlichtweg als Endoskop ausgebildet ist.

Der Aufwand, die Messvorrichtung an verschiedene Messaufgaben anzupassen, wird dadurch begünstigt, dass die starre Optik Teil der das Zwischenbild erzeugenden Optik ist.

Zum Erreichen einer gegen laterale Relativbewegung des Objektes robusten Messung ist vorteilhaft vorgesehen, dass die starre Optik nach Unendlich abbildet.

Zur Genauigkeit der Messung tragen die Maßnahmen bei, dass ein Bild der Referenzebene bzw. der weiteren Referenzebene im Schärfentiefenbereich der Superpositionsoptik liegt. Hierbei ist es günstig, dass das Bild der Referenzebene bzw. der weiteren Referenzebene in der Bildebene der Superpositionsoptik liegt, und weiterhin, dass sich das Bild der Referenzebene bzw. der weiteren Referenzebene bei Bewegung der beweglichen Optik synchron mit der Bildebene der Superpositionsoptik bewegt.

Eine vorteilhafte Ausgestaltung der Erfindung besteht desweiteren darin, dass die starre Optik als die das Zwischenbild erzeugende Optik, z.B. als Superpositionsoptik ausgebildet ist, mit der mindestens ein zum Objekt starres Zwischenbild erzeugbar ist, und dass als bewegliche Optik eine im Strahlengang hinter dem starren Zwischenbild folgende Objektiv-Optik in Richtung ihrer optischen Achse beweglich zur Abtastung des normal zu dieser Achse ausgerichteten Zwischenbilds in Tiefenrichtung und Abbilden desselben direkt oder über eine oder mehrere Zwischenabbildungen auf dem Bildwandler ausgebildet ist. Durch die Erzeugung des z.B. im Objektlichtweg liegenden starren Zwischenbilds der Objektoberfläche und der Superpositionsoptik in dem Objektlichtweg wird auch in engen Kanälen oder Bohrungen die zu messende Objektoberfläche mit relativ großer lateraler Auflösung erfassbar und mit dem Bildwandler oder der nachgeschalteten Auswerteeinrichtung hinsichtlich der Tiefenstruktur auswertbar. Die Abtastung des starren Zwischenbildes ist mit relativ einfachen Maßnahmen möglich, da zu seiner Tiefenabtastung nur wenige optische Komponenten des Objektlichtweges bewegt werden müssen, wobei die jeweils abgetastete Tiefe des starren Zwischenbildes stets im Schärfentiefenbereich der beweglichen Objektivoptik bleibt, da durch die Tiefenabtastung (Tiefenscan) die Objektebene der bewegten Objektivoptik gleichsam durch das starre Zwischenbild hindurch bewegt wird und auf diese Weise z.B. die Interferenzmaxima im Bereich größter Schärfe ausgewertet werden. Darüber hinaus ist das starre Zwischenbild stets normal zur Bewegungsrichtung der Objektiv-optik gerichtet bzw. ausrichtbar.

Bezüglich näherer Einzelheiten zur Ausbildung der starren Optik und der beweglichen Optik wird auf die deutsche Patentanmeldung 101 15 524.7-52 (DE-AI-101 15 524 veröffentlicht 15,11,2001) derselben Anmelderin verwiesen.

Für eine kurze Messzeit und eine genaue Messung sind die Maßnahmen vorteilhaft, dass die relative Änderung der optischen Länge des Objektlichtweges und der unterschiedlichen optischen Längen der Referenzlichtwege synchron zueinander erfolgt. Dabei kann die Messung der verschiedenen Flächen gleichzeitig zueinander oder zeitlich voneinander beabstandet erfolgen.

Verschiedene günstige Ausbildungsmöglichkeiten bestehen weiterhin darin, dass die Superpositionsoptik als Freie-Segmente-Optik mit verschiedenen Abbildungselementen für die Fläche und die mindestens eine weitere Fläche oder als Multifokaloptik oder als Optik mit einer Schärfentiefe von mindestens dem größten optischen Wegunterschied der mindestens zwei Flächen ausgebildet ist. Die Freie-Segmente-Optik mit z.B. mehreren Lichtablenkflächen und Linsenelementen eignet sich dabei insbesondere zur Aufnahme von schräg zueinander orientierten Flächen, die zudem unterschiedlich lange Objektlichtwege ergeben können, z.B. zur Messung von Dicke, Durchmesser oder Ausrichtung von Bezugsflächen. Eine Multifokaloptik ist z.B. geeignet, wenn parallel zueinander und senkrecht zu einem Hauptstrahlengang des Objektlichtweges orientierte Flächen betrachtet werden, z.B. Messung von Parallelität, Dicke und Höhe, während eine Optik mit einer Schärfeniefe von mindestens dem größten optischen Wegunterschied der mindestens zwei Flächen eine gleichzeitige Erfassung entsprechend weit voneinander beabstandeter, parallel zueinander orientierter Flächen zulässt, z.B. Messung von Parallelität, Dicke und Höhe.

Zum Erzielen genauer Messergebnisse sind weiterhin die Maßnahmen vorteilhaft, dass zur Beleuchtung des Objektes mit einer ebenen Welle ein Lichtwellenleiter vorgesehen ist, deren objektseitiger Ausgang in eine telezentrische Abbildungsanordnung des Objektlichtweges gelegt ist, oder dass ein Beleuchtungslichtweg mit zusätzlichen Linsen und Ablenkelementen gebildet ist.

Die Messung wird dadurch ermöglicht oder weiterhin begünstigt, dass der Referenzlichtweg dem Objektlichtweg ähnliche oder identische Optiken aufweist, durch welche die Erzeugung der Interferenzen ermöglicht wird oder der Interferenzkontrast optimiert wird oder optische Einflüsse der Komponenten im Objektlichtweg kompensiert werden.

### Zeichnungen

Die Erfindung wird nachfolgend anhand von Ausführungsbeispielen unter Bezugnahme auf die Zeichnungen näher erläutert. Es zeigen:
- Fig. 1: eine schematische Darstellung einer interferometrischen Messvorrichtung nach dem Prinzip der Weisslichtinterferometrie (Kurzkohärenzinterferometrie) mit einem Zweiteil-Referenzlichtwege aufweisenden Referenzlichtweg und einer Freie-Segmente-Optik, wobei die Freie-Segmente-Optik in zwei um 90° zueinander gedrehten Lagen dargestellt ist,
- Fig. 2: ein weiteres Ausführungsbeispiel der interferometrischen Messvorrichtung, wobei zwei Teil-Referenzlichtwege mittels eines Spiegels und eines diesem vorgelagerten teildurchlässigen Spiegels gebildet sind und in dem Objektlichtweg eine Superpositionsoptik mit getrennten Linsenelementen gebildet ist,
- Fig. 3: ein weiteres Ausführungsbeispiel für eine interferometrische Messvorrichtung, wobei in dem Objektlichtweg eine Bifokaloptik angeordnet ist,
- Fig. 4: ein weiteres Ausführungsbeispiel einer interferometrischen Messvorrichtung, bei dem die Strahlung in dem Referenzlichtweg und dem Objektlichtweg mit Lichtwellenleitern geführt wird und
- Fig. 5: ein weiteres Ausführungsbeispiel der interferometrischen Messvorrichtung, bei dem die Strahlung in dem Objektlichtweg über einen Beleuchtungslichtweg mit Linsen und Ablenkelementen geführt wird.

### Ausführungsbeispiel

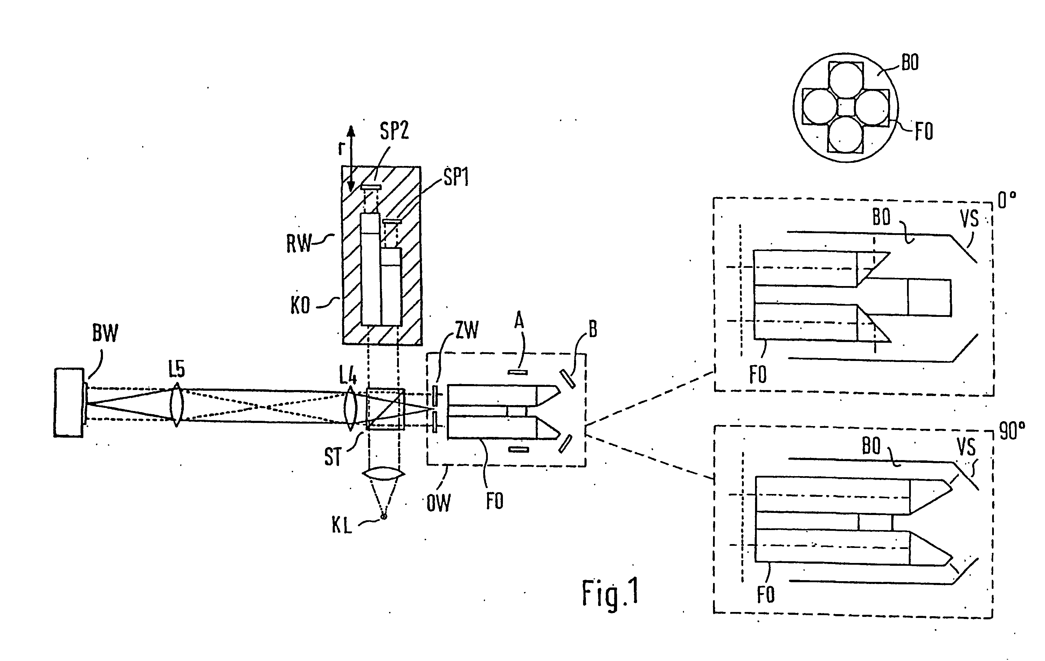

Wie Fig. 1 zeigt, weist eine auf dem Prinzip der Weisslichtinterferometrie (Kurzkohärenzinterferometrie) beruhende interferometrische Messvorrichtung einen Objektlichtweg OW, einen Referenzlichtweg RW und einen Bildwandler BW mit nachgeschalteter Auswerteeinrichtung auf, wie an sich bekannt und in den einleitend genannten Druckschriften sowie darin genannter Literatur näher beschrieben. Dabei wird ausgenutzt, dass Interferenz nur im Bereich der Kohärenzlänge auftritt, wodurch eine einfache Abstimmung der optischen Weglängen des Referenzlichtweges RW und des Objektlichtweges OW sowie die Erfassung des Interferenzmaximums ermöglicht wird. Eine von einer kurzkohärenten Lichtquelle KL abgegebene Strahlung hat dabei z.B. eine Kohärenzlänge in der Größenordnung von 10 µm. Die Strahlung der kurzkohärenten Lichtquelle KL wird mittels eines Strahlteilers ST in einen über den Referenzlichtweg RW geführten Referenzstrahl und einen über den Objektlichtweg OW geführten Objektstrahl aufgeteilt. In dem Lichtweg zu dem Bildwandler BW sind für die Abbildung vorliegend eine vierte und eine fünfte Linse L4, L5 angeordnet. Eine Besonderheit der in Fig. 1 dargestellten interferometrischen Messvorrichtung besteht darin, dass in dem Referenzlichtweg RW zwei Teil-Referenzlichtwege mit unterschiedlichen optischen Weglängen ausgebildet sind, die durch bezüglich der optischen Achse voneinander beabstandete, seitlich voneinander versetzte reflektierende Flächen, nämlich einem ersten Spiegel SP1 und SP2 gebildet sind. Die Referenzlichtwege RW enthalten eine den jeweiligen Objektlichtweg OW entsprechende oder ähnliche Kompensationsoptik KO.

In dem Objektlichtweg OW ist als weitere Besonderheit eine Superpositionsoptik in Form einer Freie-Segmente-Optik FO angeordnet, die in den rechts daneben gezeigten Darstellungen im Querschnitt (obere Darstellung) in einer 0°-Ansicht (mittlere Darstellung) und in einer 90°-Ansicht (untere Darstellung) in einem in eine Ventilbohrung BO bis in die Nähe eines Ventilsitzes VS geführten Zustand wiedergegeben ist. Mit der Freien-Segmente-Optik FO können gleichzeitig mehrere voneinander getrennte Flächen A, B der Bohrung BO bzw. des Ventilsitzes VS erfasst und in einem gemeinsamen Zwischenbild ZW in einer Zwischenbildebene im Objektlichtweg abgebildet werden, die senkrecht zu einer optischen Hauptachse des Objektlichtweges OW liegt. Die Freie-Segmente-Optik FO besitzt mehrere Licht ablenkende Flächen und abbildende Linsenelemente und ist an die jeweilige Messanforderung angepasst. Insbesondere können unterschiedlich weit von dem gemeinsamen Zwischenbild ZW entfernte und auch schräg zueinander gerichtete Flächen A, B erfasst und in dem gemeinsamen Zwischenbild ZW abgebildet werden.

Die Teil-Referenzlichtwege mit dem ersten Spiegel SP1 und dem zweiten Spiegel SP2 sind den verschiedenen, den Flächen A, B entsprechenden optischen Weglängen angepasst. Die Erfassung der den beiden Flächen A, B entsprechenden Interferenzmaxima erfolgt durch Änderung des Referenzlichtweges RW entsprechend einer Abtastrichtung r, wobei die beiden Teil-Referenzlichtwege synchron geändert werden. Die bewegte Einheit ist strichliert dargestellt.

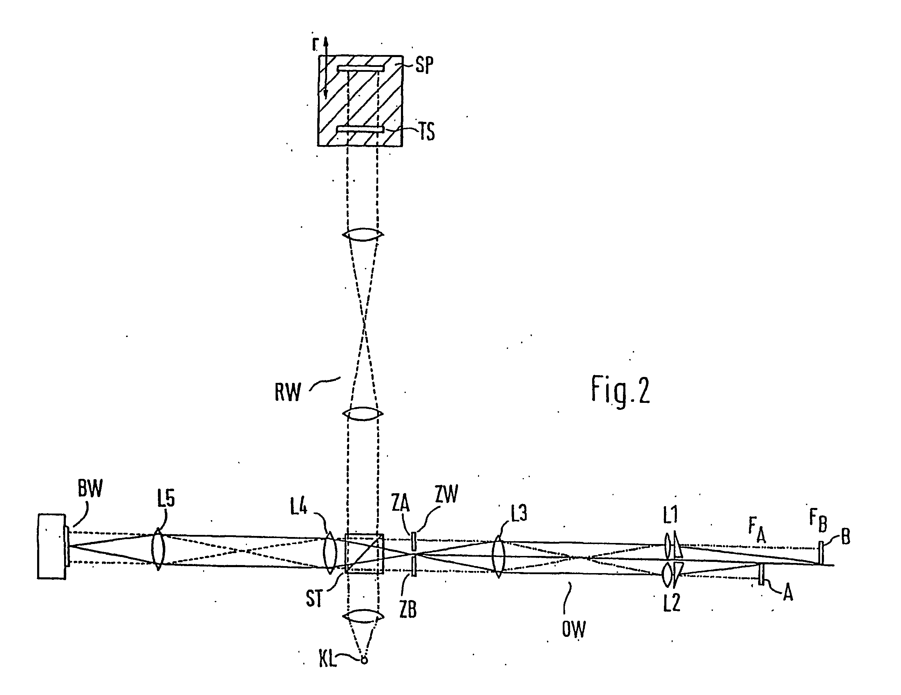

Bei dem in Fig. 2 gezeigten Ausführungsbeispiel der interferometrischen Messvorrichtung sind zwei Teil-Referenzlichtwege des Referenzlichtweges RW mittels eines äußeren Spiegels SP und eines diesem vorgeschalteten teildurchlässigen Spiegels TS gebildet. Die in dem Objektlichtweg OW angeordnete Superpositionsoptik weist zwei parallel geschaltete Linsen, nämlich eine erste Linse L1 und eine zweite Linse L2 mit verschiedenen Brennweiten auf, denen prismenförmige Elemente vorgeschaltet sein können. Der Objektlichtweg ist außerdem zum Erzeugen einer telezentrischen Abbildung ausgelegt. Mit den beiden Linsen L1 und L2 werden unterschiedlich weit, z.B. einige µm bis über 1 cm voneinander entfernte, parallel zueinander und senkrecht zur optischen Hauptachse des Objektlichtweges OW liegende Flächen A, B in das gemeinsame Zwischenbild ZW aus dem Zwischenbild ZA der Fläche A und dem Zwischenbild ZB der Fläche B in einer Zwischenbildebene im Objektlichtweg abgebildet. Die Brennweiten der ersten und der zweiten Linse L1, L2 sind mit F_{A}, F_{B} angegeben. In dem Strahlengang des Ob-jektlichtweges OW ist weiterhin eine dritte Linse L3 zur Abbildung angeordnet. Zum Erfassen des Interferenzmaximums wird die Einheit aus dem Spiegel SP und dem teildurchlässigen Spiegel TS in Abtastrichtung r bewegt, so dass die Änderung der beiden Teil-Referenzlichtwege synchron erfolgt.

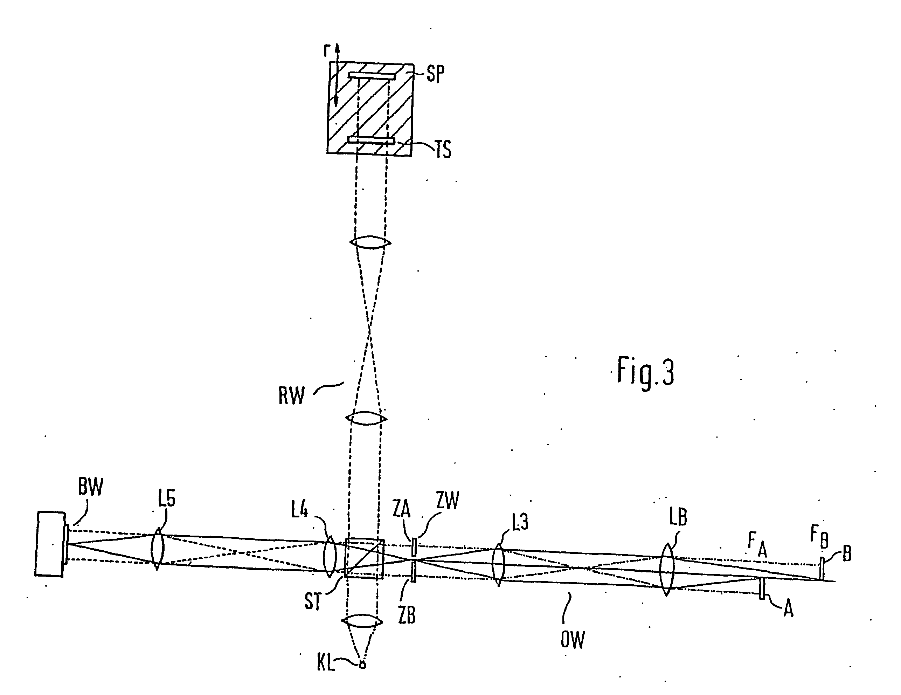

In Fig. 3 ist ein Ausführungsbeispiel der interferometrischen Messvorrichtung gezeigt, bei dem gegenüber der Fig. 2 anstelle der beiden Linsen L1, L2 eine Bifokaloptik LB angeordnet ist, deren Eigenschaft in etwa den beiden Linsen L1, L2 entspricht.

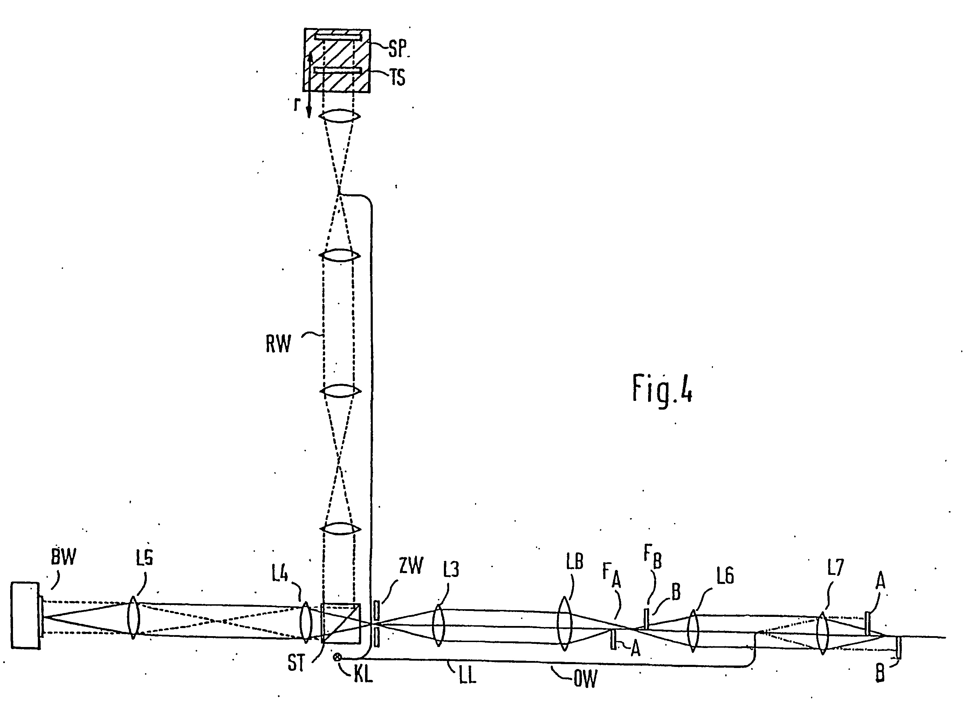

Bei dem in Fig. 4 angegebenen Ausführungsbeispiel sind in den Strahlengang des Objektlichtweges der Bifokaloptik LB objektseitig gelegene weitere Linsen L6, L7 eingebracht. In dem Objektlichtweg OW liegt außerdem ein Lichtwellenleiter LL, über den die kurzkohärente Strahlung von der Strahlungsquelle KL geführt wird, um die Flächen A, B über die weitere Linse L7 mit einer ebenen Wellenfront zu beleuchten. Im Wesentlichen entsprechende Linsen sind auch in den Referenzlichtweg RW zur Kompensation angeordnet, und auch in dem Objektlichtweg wird die Strahlung über einen Lichtwellenleiter zugeführt.

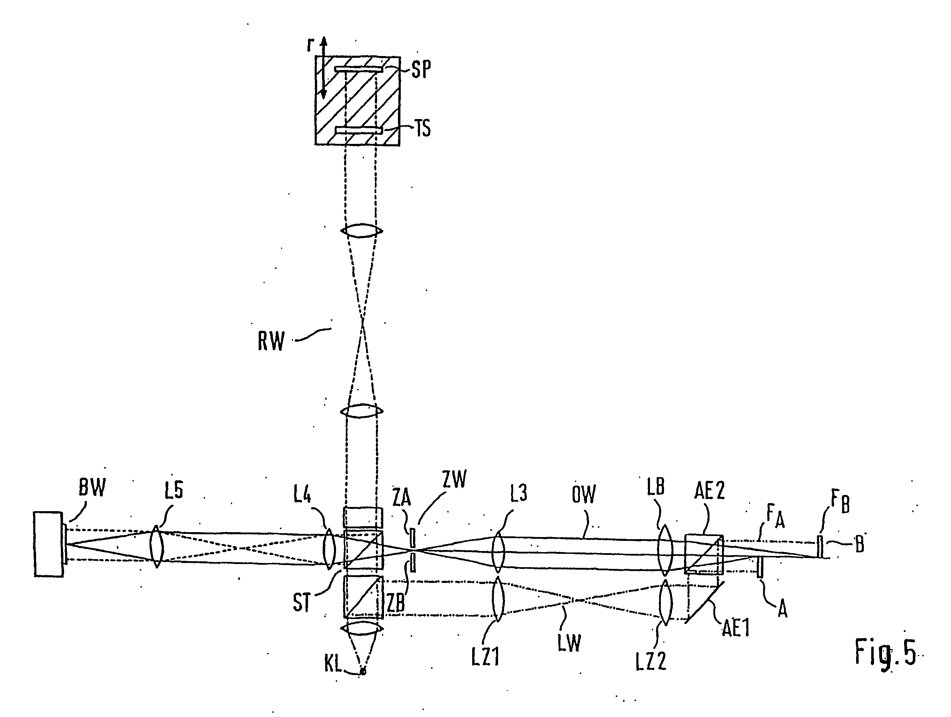

In Fig. 5 ist gegenüber der Fig. 4 in dem Objektlichtweg OW der Lichtwellenleiter LL durch einen Beleuchtungslichtweg LW mit diskreten zusätzlichen Linsen LZ1, LZ2 und Ablenkelementen AE1, AE2 ersetzt, um die Flächen A, B mit einer ebenen Welle zu beleuchten. Die weiteren Linsen L6, L7 sind dabei nicht vorgesehen.

Mit den vorstehend angegebenen interferometrischen Messvorrichtungen werden unter Verwendung von Sonderoptiken in Form der genannten Superpositionsoptiken gleichzeitig die räumlich voneinander getrennten Flächen A, B vermessbar. Dabei können Abstand bzw. Dicke und Durchmesser und Parallelität der räumlich getrennten Flächen A, B gemessen werden. Die räumlich getrennten Flächen können direkt oder über ein gemeinsames Zwischenbild ZW im Objektlichtweg auf den Bildwandler BW abgebildet werden.

Das gemeinsame Zwischenbild ZW kann direkt oder über eine oder mehrere Zwischenabbildungen auf dem Bildwandler BW z.B. einer CCD-Kamera abgebildet werden.

Mit den Teil-Referenzlichtwegen und die damit erzielten verschiedenen optischen Weglängen können die verschiedenen Flächen A, B schnell und stabil gemessen werden. Die optischen Weglängen können je nach Messaufgabe eingestellt und z.B. mit den optischen Weglängen der räumlich getrennten Flächen A, B des Objektlichtweges OW nahezu abgeglichen sein.

Der Aufbau der interferometrischen Messvorrichtung ist z.B. als Michelson-Interferometer realisiert. Die kurzkohärente Strahlungsquelle KL ist z.B. eine Superlumineszenzdiode oder eine Leuchtdiode. Mit der Beleuchtung durch die Superpositionsoptik werden die räumlich getrennten Flächen A, B des Objektes beleuchtet, wobei es günstig ist, die getrennten Flächen A, B mit nahezu ebenen Wellen zu beleuchten.

Die Superpositionsoptik in Form der Freie-Segmente-Optik FO kann z.B. aus verschiedenen einzelnen Linsensystemen bestehen, die unterschiedliche Flächen entlang unterschiedlicher optischer Achsen und mit unterschiedlichen optischen Weglängen in die gemeinsame Zwischenbildebene abbilden. Die Freie-Segmente-Optik FO kann mit optischen Elementen, wie z.B. sphärischen Linsen, asphärischen Linsen, Stablinsen oder Grin-Linsen oder mit diffraktiven optischen Elementen oder Prismen oder Spiegeln realisiert werden, die miteinander kombiniert sein können.

Anstelle der Ausbildung der Superpositionsoptik als Bifokaloptik LB kann auch eine Multifokaloptik verwendet werden, wenn mehr Flächen vermessen werden sollen. Die Multifokaloptik kann z.B. mit einer weiteren Linse zu einer telezentrischen Anordnung kombiniert werden.

Zum Abgleich der optischen Weglängen und der Dispersion in beiden Interferometerarmen, nämlich dem Referenzlichtweg RW und dem Objektlichtweg OW, sollten die Faserlängen und Geometrien der verwendeten Lichtwellenleiter möglichst identisch gewählt werden.

Die Superpositionsoptik kann näherungsweise auch durch eine Optik mit großer Schärfentiefe oder mit erweiterter Schärfentiefe, z.B. Axicon, realisiert werden.

Im Falle einer Multifokaloptik bzw. Bifokaloptik als Superpositionsoptik kann zur Kompensation in dem Referenzlichtweg RW eine Optik mit nur einer Brennebene eingesetzt werden, wie aus Fig. 3 ersichtlich.

Auf dem Bildwandler BW wird ein mit der Referenzwelle überlagertes Bild der zu betrachtenden Flächen A, B erzeugt. Zur Datenauswertung erfolgt eine z.B. durch die Abtastbewegung r bewirkte Änderung des Gangunterschiedes zwischen den optischen Weglängen im Objekt- und Referenzlichtweg (Tiefenscan). Es können entsprechend dem Stand der Technik verschiedene Vorgehensweisen zur Änderung des Gangunterschiedes vorgesehen sein, z.B. Bewegung des Referenzspiegels, Bewegung des Objektes in Tiefenrichtung, Bewegung des Objektivs in Tiefenrichtung, Bewegung des gesamten Sensors relativ zu dem Objekt oder auch eine Zwischenbildabtastung gemäß der deutschen Patentanmeldung 100 15 878 oder eine Änderung der optischen Weglänge durch akustooptische Modulatoren.

Im Bild des Objektes tritt hoher Interferenzkontrast dann auf, wenn der Gangunterschied in beiden Interferometerarmen kleiner als die Kohärenzlänge ist. Zur Gewinnung des 3D-Höhenprofils haben sich verschiedene Verfahren etabliert. Sie beruhen darauf, dass während der Tiefenabtastung für jeden Bildpunkt (Pixel) der Gangunterschied detektiert wird, bei welchem der höchste Interferenzkontrast auftritt.

## Patentansprüche

1. Interferometrische Messvorrichtung, die zur Formvermessung einer mehrere Flächen (A, B) aufweisenden Flächenanordnung eines Objektes (BO) ausgebildet ist, mit einer eine kurzkohärente Strahlung abgebenden Strahlungsquelle (KL), einem Strahlteiler (ST), mit dem ein über einen Objektlichtweg (OW) zu dem Objekt (BO) geleiteter Objektstrahl und ein über einen Referenzlichtweg (RW) zu einer reflektierenden Referenzebenenanordnung geleiteter Referenzstrahl erzeugbar sind, und mit einem Bildwandler (BW), der die von der Flächenanordnung (A) und der Referenzebenenanordnung (TS, SP1) zurückgeworfene und zur Interferenz gebrachte Strahlung aufnimmt und einer Auswerteeinrichtung zum Bestimmen eines die Flächen (A, B) betreffenden Messergebnisses zuführt, wobei zum Messen die optische Länge des Objektlichtweges (OW) relativ zu der optischen Länge des Referenzlichtweges (RW) änderbar ist oder eine Abtastung eines in dem Objektlichtweg (OW) erzeugten Zwischenbildes (ZA) der Flächen (A, B) erfolgt,
**dadurch gekennzeichnet,**
**dass** entsprechend der Anzahl der Flächen (A, B) zum Erzeugen mehrerer Teil-Referenzlichtwege mit unterschiedlichen optischen Weglängen in dem Referenzlichtweg (RW) mehrere Referenzebenen (TS, SP1, SP, SP2) angeordnet sind, die dem Tiefenscan dienen, und
**dass** die von den mehreren zu betrachtenden Flächen (A, B) und den zugeordneten Referenzebenen (TS, SP1, SP, SP2) zurückgeworfene und zur Interferenz gebrachte und für die Messung abgetastete Strahlung dem Bildwandler (BW) zugeführt und in der Auswerteeinrichtung zum Bestimmen des Messergebnisses auswertbar ist.

2. Messvorrichtung nach Anspruch 1,
**dadurch gekennzeichnet,**
**dass** in dem Objektlichtweg (OW) eine Superpositionsoptik (FO; L1, L2; LB) angeordnet ist, mit der von der Fläche (A) und der mindestens einen weiteren Fläche (B) ein Bild erzeugbar ist.

3. Messvorrichtung nach Anspruch 1 oder 2,
**dadurch gekennzeichnet,**
**dass** auch die weitere Fläche (B) direkt oder über mindestens eine Zwischenabbildung im Objektlichtweg (OW) auf dem Bildwandler (BW) abbildbar ist.

4. Messvorrichtung nach Anspruch 3,
**dadurch gekennzeichnet,**
**dass** die Referenzebene (SP1, TS) und die mindestens eine weitere Referenzebene (SP2, SP) nebeneinander oder hintereinander in dem Referenzlichtweg (RW) angeordnet sind, wobei im Falle der Hintereinanderordnung die mindestens eine vorgelagerte Referenzebene (TS) teildurchlässig ist.

5. Messvorricthung nach einem der vorhergehenden Ansprüche,
**dadurch gekennzeichnet,**
**dass** die Fläche (A) und die mindestens eine weitere Fläche (B) zu gleichzeitig oder nacheinander positionierten Objekten (BO) gehören, wobei die Fläche (A) und die mindestens eine weitere Fläche (B) unterschiedlich weit entfernt sind.

6. Messvorrichtung nach Anspruch 1 oder 2,
**dadurch gekennzeichnet,**
**dass** der Objektlichtweg (OW) zum Erzeugen eines gemeinsamen Zwischenbildes (ZW) des Zwischenbildes (ZA) der Fläche (A) und des Zwischenbildes (ZB) der weiteren Fläche(n) (B) in einer gemeinsamen Zwischenbildebene im Objektlichtweg (OW) ausgebildet ist und
**dass** das gemeinsame Zwischenbild (ZW) direkt oder über mindestens eine Zwischenabbildung im Objektlichtweg (OW) auf dem Bildwandler (BW) abbildbar ist.

7. Messvorrichtung nach einem der vorhergehenden Ansprüche,
**dadurch gekennzeichnet,**
**dass** der Referenzlichtweg (RW) in einem gesonderten Referenzarm oder in einem zu dem Objektlichtweg (OW) gehörenden Messarm ausgebildet ist.

8. Messvorrichtung nach einem der vorhergehenden Ansprüche,
**dadurch gekennzeichnet,**
**dass** im Objektlichtweg (OW) eine bezüglich des Objektes (BO) starre Optik angeordnet ist und
**dass** der starren Optik eine in Richtung ihrer optischen Achse bewegliche Optik folgt.

9. Messvorrichtung nach einem der vorhergehenden Ansprüche,
**dadurch gekennzeichnet,**
**dass** der Objektlichtweg (OW) als Endoskop ausgebildet ist.

10. Messvorrichtung nach Anspruch 8,
**dadurch gekennzeichnet,**
**dass** die starre Optik ganz oder teilweise als Endoskop ausgebildet ist.

11. Messvorrichtung nach einem der Ansprüche 8 bis 10,
**dadurch gekennzeichnet,**
**dass** die starre Optik Teil der das Zwischenbild (ZW) erzeugenden Optik ist.

12. Messvorrichtung nach einem der Ansprüche 8 bis 11,
**dadurch gekennzeichnet,**
**dass** die starre Optik Teil der Superpositionsoptik ist.

13. Messvorrichtung nach einem der Ansprüche 8 bis 12,
**dadurch gekennzeichnet,**
**dass** die starre Optik nach Unendlich abbildet.

14. Messvorrichtung nach einem der Ansprüche 8 bis 13,
**dadurch gekennzeichnet,**
**dass** ein Bild der Referenzebene (TS, SP1) und der weiteren Referenzebene (SP, SP2) im Schärfentiefenbereich der Superpositionsoptik liegt.

15. Messvorrichtung nach einem der Ansprüche 8 bis 14,
**dadurch gekennzeichnet,**
**dass** das Bild der Referenzebene (TS, SP1) und der weiteren Referenzebene (SP, SP1) in der Bildebene der Superpositionsoptik liegt.

16. Messvorrichtung nach einem der Ansprüche 8 bis 15,
**dadurch gekennzeichnet,**
**dass** sich das Bild der Referenzebene (TS, SP1) und der weiteren Referenzebene (SP, SP2) bei Bewegung der beweglichen Optik synchron mit der Bildebene der Superpositionsoptik bewegt.

17. Messvorrichtung nach einem der Ansprüche 8 bis 16,
**dadurch gekennzeichnet,**
**dass** die starre Optik als die das starre Zwischenbild erzeugende Optik ausgebildet ist, mit der mindestens ein zum Objekt (BO) starres Zwischenbild erzeugbar ist, und
**dass** als bewegliche Optik eine im Strahlengang hinter dem starren Zwischenbild folgende Objektiv-Optik in Richtung ihrer optischen Achse beweglich zur Abtastung des normal zu dieser Achse ausgerichteten Zwischenbilds in Tiefenrichtung und Abbilden desselben direkt oder über eine oder mehrere Zwischenabbildungen auf dem Bildwandler (BW) ausgebildet ist.

18. Messvorrichtung nach einem der Ansprüche 8 bis 17,
**dadurch gekennzeichnet,**
**dass** die Zwischenabbildung einen für alle im Zwischenbild abgebildeten Objektpunkte den gleichen Abbildungsmaßstab besitzt.

19. Messvorrichtung nach einem der Ansprüche 8 bis 18,
**dadurch gekennzeichnet,**
**dass** die starre Optik als 4f-Anordnung ausgebildet ist.

20. Messvorrichtung nach einem der vorhergehenden Ansprüche,
**dadurch gekennzeichnet,**
**dass** die relative Änderung der optischen Länge des Objektlichtweges (OW) und der unterschiedlichen optischen Längen der Referenzlichtwege (RW) synchron erfolgt.

21. Messvorrichtung nach einem der vorhergehenden Ansprüche,
**dadurch gekennzeichnet,**
**dass** die Superpositionsoptik als Freie-Segmente-Optik (Fo) mit verschiedenen Abbildungselementen für die Fläche (A) und die mindestens eine weitere Fläche (B) oder als Multifokaloptik (LB) oder als Optik mit einer Schärfentiefe von mindestens dem größten optischen Wegunterschied der mindestens zwei Flächen (A, B) ausgebildet ist.

22. Messvorrichtung nach einem der vorhergehenden Ansprüche,
**dadurch gekennzeichnet,**
**dass** zur Beleuchtung des Objektes mit einer ebenen Welle ein Lichtwellenleiter (LL) vorgesehen ist, deren objektseitiger Ausgang in eine
telezentrische Abbildungsanordnung des Objektlichtweges (OW) gelegt ist, oder
**dass** ein Beleuchtungslichtweg (LW) mit zusätzlichen Linsen (LZ1, LZ2) und Ablenkelementen (AE1, AE2) gebildet ist.

23. Messvorrichtung nach einem der vorhergehenden Ansprüche,
**dadurch gekennzeichnet,**
**dass** der Referenzlichtweg (RW) dem Objektlichtweg (OW) ähnliche oder identische Optiken aufweist.

## Claims

1. Interferometric measurement apparatus, which is designed to measure the shape of a surface arrangement, which has two or more surfaces (A, B), of an object (BO), having a radiation source (KL) which emits short-coherent radiation, a beam splitter (ST) by means of which an object beam (which is passed over an object light path (OW) to the object (BO)) and reference beam (which is passed over a reference light path (RW) to a reflective reference plane arrangement) can be produced, and having an image sensor (BW) which receives the radiation which has been thrown-back from the surface arrangement (A) and from the reference plane arrangement (TS, SP1) and is caused to interfere, and supplies this radiation to an evaluation device for determination of a measurement result relating to the surfaces (A, B) in which case the optical length of the object light path (OW) relative to the optical length of the reference light path (RW) can be varied for measurement, or an intermediate image (ZA), which is produced in the object light path (OW), of the surfaces (A, B) is scanned,
**characterized**
**in that** two or more reference planes (TS, SP1, SP, SP2) are arranged in the reference light path (RW), corresponding to the number of surfaces (A, B), in order to produce two or more reference light path elements with different optical path lengths, and these reference planes (TS, SP1, SP, SP2) are used for depth scanning, and
**in that** the radiation which has been thrown back from the two or more surfaces (A, B) to be considered and from the associated reference planes (TS, SP1; SP, SP2), is caused to interfere and is scanned for the measurement is supplied to the image sensor (BW), and can be evaluated in the evaluation device in order to determine the measurement result.

2. Measurement apparatus according to Claim 1,
**characterized**
**in that** superposition optics (FO; L1, L2; LB) are arranged in the object light path (OW) and can be used to produce an image of the surface (A) and of the at least one further surface (B).

3. Measurement apparatus according to Claim 1 or 2,
**characterized**
**in that** the further surface (B) can also be imaged on the image sensor (BW), either directly or via at least one intermediate image in the object light path (OW).

4. Measurement apparatus according to Claim 3,
**characterized**
**in that** the reference plane (SP1, TS) and the at least one further reference plane (SP2, SP) are arranged alongside one another or one behind the other in the reference light path (RW), in which case, if they are arranged one behind the other, the at least one upstream reference plane (TS) is partially transmissive.

5. Measurement apparatus according to one of the preceding claims,
**characterized**
**in that** the surface (A) and the at least one further surface (B) are associated with objects (BO) which are positioned at the same time or successively, with the surface (A) and the at least one further surface (B) being at different distances.

6. Measurement apparatus according to Claim 1 or 2,
**characterized**
**in that** the object light path (OW) is designed to produce a common intermediate image (ZW) of the intermediate image (ZA) of the surface (A) and of the intermediate image (ZB) of the further surface or surfaces (B) on a common intermediate image plane in the object light path (OW) and
**in that** the common intermediate image (ZW) can be imaged on the image sensor (BW) directly or via at least one intermediate image in the object light path (OW).

7. Measurement apparatus according to one of the preceding claims,
**characterized**
**in that** the reference light path (RW) is formed in a separate reference arm or in a measurement arm associated with the object light path (OW).

8. Measurement apparatus according to one of the preceding claims,
**characterized**
**in that** optics which are rigid with respect to the object (BO) are arranged in the object light path (OW), and
**in that** the rigid optics follow optics which can move in the direction of their optical axis.

9. Measurement apparatus according to one of the preceding claims,
**characterized**
**in that** the object light path (OW) is in the form of an endoscope.

10. Measurement apparatus according to Claim 8,
**characterized**
**in that** the rigid optics are entirely or partially in the form of an endoscope.

11. Measurement apparatus according to one of Claims 8 to 10,
**characterized**
**in that** the rigid optics are part of the optics which produce the intermediate image (ZW).

12. Measurement apparatus according to one of Claims 8 to 11,
**characterized**
**in that** the rigid optics are part of the superposition optics.

13. Measurement apparatus according to one of Claims 8 to 12,
**characterized**
**in that** the rigid optics produce an image at infinity.

14. Measurement apparatus according to one of Claims 8 to 13,
**characterized**
**in that** an image of the reference plane (TS, SP1) and of the further reference plane (SP, SP2) is located in the depth of focus range of the superposition optics.

15. Measurement apparatus according to one of Claims 8 to 14,
**characterized**
**in that** the image of the reference plane (TS, SP1) and of the further reference plane (SP, SP1) is located on the image plane of the superposition optics.

16. Measurement apparatus according to one of Claims 8 to 15,
**characterized**
**in that** the image of the reference plane (TS, SP1) and of the further reference plane (SP, SP2) moves in synchronism with the image plane of the superposition optics during movement of the moving optics.

17. Measurement apparatus according to one of Claims 8 to 16,
**characterized**
**in that** the rigid optics are the optics which produce the rigid intermediate image, by means of which at least one intermediate image can be produced which is rigid with respect to the object (BO), and
**in that** objective optics which are downstream from the rigid intermediate image in the beam path are designed, as the moving optics, such that they can move in the direction of their optical axis in order to scan the intermediate image (which is aligned at right angles to this axis) in the depth direction and in order to image this intermediate image on the image sensor (BW) directly or via one or more intermediate images.

18. Measurement apparatus according to one of Claims 8 to 17,
**characterized**
**in that** the intermediate image is on the same imaging scale for all object points which are imaged in the intermediate image.

19. Measurement apparatus according to one of Claims 8 to 18,
**characterized**
**in that** the rigid optics are a 4f arrangement.

20. Measurement apparatus according to one of the preceding claims,
**characterized**
**in that** the relative change in the optical length of the object light path (OW) and in the various optical lengths of the reference light paths (RW) is synchronous.

21. Measurement apparatus according to one of the preceding claims,
**characterized**
**in that** the superposition optics are free segment optics (Fo) with different imaging elements for the surface (A) and for the at least one further surface (B) or are multifocal optics (LB) or optics with a depth of focus covering at least the greatest optical path difference for the at least two surfaces (A, B).

22. Measurement apparatus according to one of the preceding claims,
**characterized**
**in that** an optical waveguide (LL) is provided for illumination of the object with a planar wave, whose output on the object side is located in a telecentric imaging arrangement of the object light path (OW) or
**in that** an illumination light path (LW) is formed with additional lenses (LZ1, LZ2) and deflection elements (AE1, AE2).

23. Measurement apparatus according to one of the preceding claims,
**characterized**
**in that** the reference light path (RW) has optics which are similar to or identical to the object light path (OW).

## Revendications

1. Dispositif de mesure interférométrique conçu pour mesurer les formes d'une disposition de surfaces d'un objet (BO) présentant plusieurs surfaces (A, B), comprenant une source de rayonnement (KL) émettant un rayonnement à faible cohérence, un diviseur de rayon (ST) permettant de générer un rayon d'objet guidé sur un trajet de lumière d'objet (OW) vers l'objet (BO) et un rayon de référence guidé sur un trajet de lumière de référence (RW) vers une disposition de plans de référence réfléchissante, et un convertisseur d'image (BW) qui reçoit le rayonnement réfléchi et mis en interférence par la disposition de surfaces (A) et la disposition de plans de référence (TS, SP1) et le transmet à une unité d'exploitation pour déterminer un résultat de mesure concernant les surfaces (A, B), dans lequel, pour la mesure, la longueur optique du trajet de lumière d'objet (OW) est variable par rapport à la longueur optique du trajet de lumière de référence (RW), ou un balayage d'une image intermédiaire (ZA) des surfaces (A, B) générée dans le trajet de lumière d'objet (OW) est effectué,
**caractérisé en ce qu'** en fonction du nombre de surfaces (A, B), pour générer plusieurs trajets de lumière de référence partiels avec des longueurs de trajet optique différentes, plusieurs plans de référence (TS, SP1, SP, SP2) qui servent au balayage en profondeur sont disposés dans le trajet de lumière de référence (RW), et le rayonnement réfléchi et mis en interférence par les surfaces (A, B) à observer et les plans de référence (TS, SP1, SP, SP2) associés et balayés pour la mesure, est transmis au convertisseur d'image (BW) et peut être exploité dans le dispositif d'exploitation pour déterminer le résultat de mesure.

2. Dispositif de mesure selon la revendication 1,
**caractérisé en ce qu'** une optique de superposition (FO ; L1, L2 ; LB) est disposée dans le trajet de lumière d'objet (OW), permettant de générer une image de la surface (A) et au moins de l'autre surface (B).

3. Dispositif de mesure selon la revendication 1 ou 2,
**caractérisé en ce que** l'autre surface (B) peut également être reproduite sur le convertisseur d'image (BW) soit directement soit par au moins une reproduction intermédiaire dans le trajet de lumière d'objet (OW).

4. Dispositif de mesure selon la revendication 3,
**caractérisé en ce que** le plan de référence (SP1, TS) et au moins l'autre plan de référence (SP2, SP) sont juxtaposés ou disposés l'un derrière l'autre dans le trajet de lumière de référence (RW), au moins le plan de référence (TS) en amont étant partiellement transparent dans le cas d'une disposition l'un derrière l'autre.

5. Dispositif de mesure selon l'une quelconque des revendications précédentes,
**caractérisé en ce que** la surface (A) et au moins l'autre surface (B) appartiennent à des objets (BO) positionnés simultanément ou les uns après les autres, la surface (A) et au moins l'autre surface (B) présentant une distance différente.

6. Dispositif de mesure selon la revendication 1 ou 2,
**caractérisé en ce que** pour générer une image intermédiaire commune (ZW) de l'image intermédiaire (ZA) de la surface (A) et de l'image intermédiaire (ZB) de l'autre ou des autres surface(s) (B), le trajet de lumière d'objet (OW) est formé dans un plan d'image intermédiaire commun dans le trajet de lumière d'objet (OW), et l'image intermédiaire commune (ZW) peut être reproduite sur le convertisseur d'image (BW) soit directement soit par au moins une reproduction intermédiaire dans le trajet de lumière d'objet (OW).

7. Dispositif de mesure selon l'une quelconque des revendications précédentes,
**caractérisé en ce que** le trajet de lumière de référence (RW) est formé dans une branche de référence distincte ou dans une branche de mesure appartenant au trajet de lumière d'objet (OW).

8. Dispositif de mesure selon l'une quelconque des revendications précédentes,
**caractérisé en ce qu'** une optique fixe par rapport à l'objet (BO) est disposée dans le trajet de lumière d'objet (OW), et l'optique fixe est suivie d'une optique mobile en direction de son axe optique.

9. Dispositif de mesure selon l'une quelconque des revendications précédentes,
**caractérisé en ce que** le trajet de lumière d'objet (OW) présente la forme d'un endoscope.

10. Dispositif de mesure selon la revendication 8,
**caractérisé en ce que** l'optique fixe est configurée complètement ou partiellement comme un endoscope.

11. Dispositif de mesure selon l'une quelconque des revendications 8 à 10,
**caractérisé en ce que** l'optique fixe fait partie de l'optique générant l'image intermédiaire (ZW).

12. Dispositif de mesure selon l'une quelconque des revendications 8 à 11,
**caractérisé en ce que** l'optique fixe fait partie de l'optique de superposition.

13. Dispositif de mesure selon l'une quelconque des revendications 8 à 12,
**caractérisé en ce que** l'optique fixe reproduit vers l'infini.

14. Dispositif de mesure selon l'une quelconque des revendications 8 à 13,
**caractérisé en ce qu'**
une image du plan de référence (TS, SP1) et de l'autre plan de référence (SP, SP2) se situe dans la profondeur de champ de l'optique de superposition.

15. Dispositif de mesure selon l'une quelconque des revendications 8 à 14,
**caractérisé en ce que** l'image du plan de référence (TS, SP1) et de l'autre plan de référence (SP, SP2) se situe dans le plan d'image de l'optique de superposition.

16. Dispositif de mesure selon l'une quelconque des revendications 8 à 15,
**caractérisé en ce que** lors d'un mouvement de l'optique mobile, l'image du plan de référence (TS, SP1) et de l'autre plan de référence (SP, SP2) se déplace de manière synchronisée avec le plan d'image de l'optique de superposition.

17. Dispositif de mesure selon l'une quelconque des revendications 8 à 16,
**caractérisé en ce que**
l'optique fixe est prévue comme optique générant l'image intermédiaire fixe permettant de générer au moins une image intermédiaire fixe par rapport à l'objet (BO), et l'optique mobile est une optique à objectif disposée derrière l'image intermédiaire fixe mobile en direction de son axe optique pour balayer en profondeur l'image intermédiaire orientée normalement par rapport à cet axe et pour reproduire celle-ci sur le convertisseur d'image (BW) soit directement soit par une ou plusieurs reproductions intermédiaires.

18. Dispositif de mesure selon l'une quelconque des revendications 8 à 17,
**caractérisé en ce que** la reproduction intermédiaire présente la même échelle de reproduction pour tous les points d'objet reproduits sur l'image intermédiaire.

19. Dispositif de mesure selon l'une quelconque des revendications 8 à 18,
**caractérisé en ce que**
l'optique fixe présente la forme d'un dispositif 4f.

20. Dispositif de mesure selon l'une quelconque des revendications précédentes,
**caractérisé en ce que**
la variation relative de la longueur optique du trajet de lumière d'objet (OW) et des longueurs optiques différentes des trajets de lumière de référence (RW) est synchronisée.

21. Dispositif de mesure selon l'une quelconque des revendications précédentes,
**caractérisé en ce que**
l'optique de superposition est une optique à segments libres (Fo) avec différents éléments de reproduction pour la surface (A) et au moins l'autre surface (B), ou une optique multifocale (LB) ou une optique avec une profondeur de champ correspondant au moins à la plus grande différence de trajet optique au moins des deux surfaces (A, B).

22. Dispositif de mesure selon l'une quelconque des revendications précédentes,
**caractérisé en ce qu'**
un guide d'ondes optiques (LL) dont la sortie côté objet est placée dans une disposition de reproduction télécentrique du trajet de lumière optique (OW) est prévu pour l'éclairage de l'objet avec une onde plane, ou un trajet de lumière d'éclairage (LW) avec des lentilles (LZ1, LZ2) et des éléments de déflexion (AE1, AE2) supplémentaires est formé.

23. Dispositif de mesure selon l'une quelconque des revendications précédentes,
**caractérisé en ce que**
le trajet de lumière de référence (RW) présente des optiques similaires ou identiques à celles du trajet de lumière d'objet (OW).
